# EUROPÄISCHE PATENTANMELDUNG

(11) **EP 1 517 116 A1**
(43) Veröffentlichungstag der Anmeldung: **23.03.2005**
(21) Anmeldenummer: 03021133.8
(22) Anmeldetag: 22.09.2003
(51) Int. Cl.: G01C 11/04

(54) **Verfahren und Vorrichtung zur Bestimmung der Aktualposition eines geodätischen Instrumentes**

(71) Anmelder: Leica Geosystems AG, 9435 Heerbrugg (CH)
(72) Erfinder: Euler, Hans-Jürgen, Dr., 9435 Heerbrugg (CH)
(74) Vertreter: Kaminski, Susanne, Dr.

(57) **Zusammenfassung**

Zur Bestimmung der Aktualposition (A) eines geodätischen Messinstruments (1) in einem Totbereich (T), in dem von einem Positionierungssystem stammende Signale abgeschattet sind, werden mindestens zwei Referenzstrukturen (5) von mindestens zwei bekannten Positionen aus erfasst und den Referenzstrukturen (5) zugeordnete Entfernungen gemessen. Zu diesen Entfernungsmessungen werden verknüpfte Bildinformationen aufgenommen, welche Informationen über die Anordung der Referenzstrukturen (5) beinhalten.

Durch eine nachfolgende Erfassung der Referenzstrukturen (5) von einem Standort im Totbereich (T) aus kann die Aktualposition (A) abgeleitet werden. Vorteilhafterweise werden zur Identifizierung und Vermessung der Referenzstrukturen (5) Verfahren der Bildverarbeitung verwendet.

## Beschreibung

Die Erfindung betrifft ein Verfahren zur Bestimmung der Aktualposition eines geodätischen Instrumentes nach Anspruch 1, eine Vorrichtung zur Durchführung dieses Verfahrens nach dem Oberbegriff des Anspruchs 14, ein geodätisches Instrument mit einer solchen Vorrichtung nach Anspruch 19 sowie ein Computerprogrammprodukt nach Anspruch 20.

In vielen geodätischen Anwendungen werden Verfahren und Systeme zur Positionsbestimmung eines geodätischen Instrumentes verwendet, die auf der Ausbreitung von Signalen beruhen, die abgeschattet werde können und somit in ihrer Nutzbarkeit eingeschränkt werden. Ein Beispiel für solche Positionsbestimmungssysteme sind globale Positionierungssysteme wie z.B. GPS, GLONASS oder das im Aufbau befindliche europäische Galileo-System. Diese Systeme basieren auf dem möglichst ungestörten Empfang von Satellitensignalen. Im unmittelbaren Nahbereich von Hindernissen kann aufgrund deren abschattender Wirkung der Empfang der Signale eingeschränkt oder vollständig unmöglich sein, so dass eine Positionsbestimmung mit diesem System nicht mehr möglich ist. Ein weiteres Beispiel stellt die Positionsbestimmung eines reflektortragenden Instrumentes mit einem Theodoliten bzw. Tachymeter dar. Durch eine Richtungs- und Entfernungsmessung mit dem Tachymeter zu dem geodätischen Instrument kann bei bekannter Position des Tachymeters auch die Position des Instruments bestimmt werden. Voraussetzung für die Messung ist hier die Sichtverbindung zwischen den beiden Komponenten. Erfolgt eine Unterbrechung dieser Verbindung, z.B. durch Bewuchs oder Gebäude im Sichtbereich, versagt die Art der Positionsbestimmung.

Um eine Positionsbestimmung der Aktualposition, also des gegenwärtigen Standortes des Instruments, auch in einem solcherart abgeschatteten Totbereich zu ermöglichen, sind Verfahren bekannt, die auf einer Bestimmung der eigenen Position gegenüber hinsichtlich ihrer Position bekannten Objekten beruhen. Ein Beispiel hierfür stellt das klassische Verfahren des Rückwärtsschnittes dar.

In vielen Fällen verfügt ein geodätisches Instrument nur über eine Fähigkeit zur Entfernungsmessung bzw. eine Messung von Winkeln ist nicht mit der benötigten Präzision oder Geschwindigkeit durchzuführen. In diesen Fällen muss die Positionsbestimmung allein durch Entfernungsmessungen durchgeführt werden. Hierzu werden die Entfernungen zu mehreren Punkten mit bekannter Position gemessen und mit bekannten Verfahren, wie sie beispielsweise auch in der Photogrammetrie verwendet werden, ein Beispiel hierfür stellen Korrelationsverfahren bzw. Korrelationsrechnungen dar, kann die Bestimmung der Aktualposition erfolgen. Dabei ist die Zahl der benötigen Punkte abhängig von deren Lage und der beabsichtigten Genauigkeit der Messung. Im Regelfall werden aber, abgesehen von besonders günstigen Konstellationen, mindestens 3 oder 4 Punkte benötigt. Wird zusätzlich ein Winkel berücksichtigt, z.B. indem zusätzlich der Winkel gegenüber der Horizontalen erfasst wird, kann die Zahl der Punkte reduziert werden.

Um nun mit einem rein entfernungsmessenden Verfahren auch Positionen im Totbereich zur Vermessung verwenden zu können, ist zuerst nötig, von bekannten Standorten aus die später zur Referenzierung benötigten Referenzpunkte zu vermessen.

Ein hierfür geeignetes Vermessungsgerät wird beispielsweise in der europäischen Patentschrift EP 0 403 585 B1 beschrieben. Das Vermessungsgerät verfügt über einen Empfänger für ein Satelliten-Positionsmess-System und einen, vorzugsweise elektrooptischen oder auf dem Ultraschallprinzip beruhenden Distanzmesser. Beide Komponenten sind auf einem Lotstock angebracht, der mit seiner Lotstabspitze präzise positioniert werden kann und über einen Neigungsmesser sowie eine Anzeige der vertikalen Ausrichtung verfügt. Optional kann auch ein auf das Erdmagnetfeld reagierender Sensor vorhanden sein. Durch mindestens 2 Messungen zu einem Punkt von 2 unterschiedlichen bekannten Positionen aus, die z.B. durch das Satelliten-Positionsmess-System bestimmt werden, kann nun die Position dieses Punkts bestimmt werden, auch wenn dieser innerhalb des Totbereichs liegt.

Umgekehrt kann auch die Position eines solchen Vermessungsgeräts im Totbereich durch Messungen zu mehreren bekannten Punkten im Rückwärtsschnittverfahren bestimmt werden.

Sollen nun im Rahmen einer Vermessung Vermessungspositionen für das geodätische Instrument sowohl in vom Positionierungssystem erfassten Räumen als auch in Totbereichen verwendet werden, so ist es notwendig, vor Nutzung des Totbereichs entsprechende Referenzpunkte für eine spätere Bestimmung der Aktualposition im Totbereich zu vermessen. Soll auf eine explizite Winkelmessung verzichtet werden, müssen im Regelfall mindestens für drei bis vier Punkte von mindestens drei bis vier bekannten Positionen aus die Entfernungen gemessen werden, um eine eindeutige Positionsbestimmung zu ermöglichen. Die jeweils tatsächlich benötigte Zahl an Punkten ist abhängig von der Lage der bekannten Punkten und ggf. möglicher Einschränkungen zur Reduzierung einer Mehrdeutigkeit. Bei drei Entfernungsmessungen zu einem Punkt wird durch die drei bekannten Punkte eine Ebene definiert, an der die zu bestimmende Position gespiegelt werden kann. Als Lösung ergeben sich zwei mögliche Positionen, von denen aber meist eine Position aus Plausibilitätsgründen, z.B. weil sie unter der Erdoberfläche liegen würde, oder aufgrund einfacher weiterer Informationen ausgeschlossen werden kann, wie z.B. der Unterscheidung zwischen Nord und Süd, die auch durch einen einfachen Magnetkompass getroffen werden kann. Eine eindeutige Bestimmung mit drei bekannten Punkten ist möglich, wenn günstige geometrische Verhältnisse vorliegen. Dies ist beispielsweise der Fall, wenn die gesuchte Position auf einer Verbindungsgeraden zwischen zwei bekannten Punkten liegt.

Je nach den Gegebenheiten einer Messung müssen somit mindestens zwischen 9 und 16 Entfernungsmessungen durchgeführt werden, bei denen jeweils eine korrekte Zuordnung von Messung zu Referenzpunkt und bekannter Position erfolgen muss. Eine manuelle Durchführung solcher Messungen bedingt damit einen hohen Handhabungsaufwand und eine fehlererzeugende Komplexität.

Darüber hinaus müssen zur Erzielung einer hinreichenden Genauigkeit der Positionsbestimmung aufgrund ihrer geometrischen Anordnung geeignete Referenzpunkte gewählt werden. Auch der bewusst zu vollziehende Positionswechsel zwischen den bekannten Positionen wirkt sich störend auf den Messvorgang aus. Schliesslich ist mit solchen Verfahren des Stands der Technik stets die Ausdehnung der vom Positionierungssystem erfassten und abgeschatteten Bereiche aktiv zu beobachten, um rechtzeitig einen Wechsel des zu verwendenden Positionierungsverfahrens durchführen zu können.

Eine Aufgabe der vorliegenden Erfindung besteht darin, die für eine Bestimmung der Aktualposition in einem abgeschatteten Bereich notwendige Zahl von Referenzpunkten und/oder von Messungen zur Bestimmung der Position dieser Referenzpunkte zu verringern.

Die Erhöhung der Positionsgenauigkeit bei der Bestimmung einer Aktualposition in einem abgeschatteten Bereich ist eine weitere Aufgabe der vorliegenden Erfindung.

Eine weitere Aufgabe ist die Vereinfachung und Verkürzung der Messungen zur Bestimmung von Referenzpunkten und Aktualposition.

Eine weitere Aufgabe der Erfindung besteht darin, eine automatische Identifizierung und Vermessung der Referenzpunkte zu ermöglichen.

Schliesslich ist die Automatisierung der Positionsbestimmung und des automatisierten Wechsels zwischen den jeweils hierfür geeigneten Verfahren eine weitere Aufgabe der vorliegenden Erfindung.

Diese Aufgaben werden erfindungsgemäss durch Merkmale der Ansprüche 1, 14 bzw. 19 oder durch Merkmale der Unteransprüche gelöst.

Die Erfindung betrifft ein Verfahren und eine Vorrichtung zur Bestimmung der Aktualposition eines geodätischen Instrumentes. Hierfür werden durch eine Vorrichtung in einem Bereich, in dem abschattbare Signale eines Positionierungssystems empfangen werden können, an mindestens zwei Positionen Entfernungsmessungen zu jeweils mindestens zwei Referenzpunkten vorgenommen. Mit diesen Entfernungen verknüpft werden zusätzlich Bildinformationen durch die Vorrichtung aufgenommen. Diese können aus vollständigen Bildern eines erfassten Sichtbereichs oder aber beispielsweise aus Teilbildern oder Ausschnitten bestehen. Die gemessenen Entfernungen werden mit der Bildinformation verknüpften bzw. in dieser enthaltenen Referenzstrukturen zugeordnet. Diese Referenzstrukturen können im einfachsten Fall Punkte, aber auch grössere oder komplexere Strukturen, darstellen. Geeignete Punkte stellen z.B. gut identifizierbare Übergänge, Kanten oder Kreuzungen von Linien, wie beispielsweise Fensterecken oder Fensterkreuze dar. Der Begriff Bildinformation beinhaltet insbesondere die Anordnungsbeziehung für einzelne Punkte. Diese Punkte werden erfindungsgemäss meist mit Entfernungsmessungen zu als Referenzstrukturen verwendeten Objekten verknüpft sein, wobei diese Entfernungsmessungen jeweils den physikalischen Bildpunkten eines Empfängers zugeordnet werden, die das Objekt repräsentieren bzw. zu dessen Abbild auf dem Empfänger gehören. Aus der gegenseitigen Anordnung der Entfernungsmessungen kann dann wiederum eine logische Zuordnung von Entfernung und Referenzpunkt abgeleitet werden. Unter Bildinformation soll hier insbesondere auch die gegenseitige Anordnung oder Orientierung von Entfernungsmessungen verstanden werden, die gleichzeitig zu allen Bildpunkten eines erfassten Sichtbereichs erfolgen. Damit besteht ein Bild nicht mehr notwendigerweise aus der Aufnahme von Texturen bzw. Oberflächen, sondern kann auch ausschliesslich aus miteinander in Bezug gesetzten, insbesondere geometrisch angeordneten, Entfernungsmessungen bestehen. Ein solches Range Imaging liefert damit beispielsweise eine zweidimensionale Anordnung von Entfernungsmessungen und damit eine Art dreidimensionales Bild bzw. eine Topographie des erfassten Sicht- bzw. Messfeldes. Die Messungen können jedoch auch einem normalen, Textur-erfassenden Bild zugeordnet sein. Beispielsweise können für jeden Bildpunkt Helligkeit und Entfernung aufgenommen werden, so dass für jede Bildinformation, die beispielsweise aus der Lage eines physikalischen Bildpunktes auf dem Empfänger besteht, eben diese Helligkeitswerte und Entfernungen verfügbar sind. Jedoch kann auch die Anordnung einer Entfernungsmessung relativ zu anderen Entfernungsmessungen erfolgen, so dass auch auf die Kenntnis der absoluten Lage eines Bildpunktes auf dem Empfänger verzichtet werden kann. Hierdurch kann beispielsweise auf eine vollständige Auswertung des mit dem Empfänger erfassten Sichtbereichs verzichtet werden, so dass sich z.B. mit Subwindowing oder Subframing höhere Verarbeitungsgeschwindigkeiten realisieren lassen.

Die Entfernungen können nun direkt zu den Referenzstrukturen gemessen werden oder aber auch zu Stützpunkten erfolgen, von denen dann Entfernungsinformationen bezüglich der Referenzstrukturen abgeleitet werden können.

Zur Aufnahme von Bildern stehen mit CCD- und CMOS-Kameras eine Vielzahl von geeigneten Sensoren zur Verfügung, die mittlerweile in einigen Versionen auch für jeden Bildpunkt zusätzlich Entfernungsinformationen aufnehmen können (Range Imaging), so dass beispielsweise auch die oben beschriebenen dreidimensionalen Bilder abgeleitet werden können. Werden solche Sensoren verwendet, so können zeitgleich Entfernungsmessungen zu vielen Punkten des Bildes erfolgen. Grundsätzlich können jedoch auch scannende Lösungen verwendet werden, bei denen parallel zur Aufnahme der Bildinformation der Bildinhalt sequentiell hinsichtlich seiner Entfernung vermessen wird.

Alternativ kann erfindungsgemäss auch eine manuelle Entfernungsmessung zu ausgewählten Punkten in einem Bild erfolgen. Hierfür geeignete Verfahren und Vorrichtungen zur manuell gesteuerten Vermessung von Punkten in einem erfassten Bild sind beispielsweise aus der EP 1 314 940 A1 bekannt. Die darin beschriebene elektronische Anzeige- und Steuervorrichtung erlaubt die Auswahl von Punkten in einem Bild, zu denen Messungen durchgeführt werden können, ohne dass eine Bewegung der optischen Achse erfolgen muss. Durch die manuelle Auswahl von Punkten und deren sequentielle, ggf. automatische Vermessung werden Entfernung und Bildinformation der verschiedenen Punkte verknüpft.

Aus den von den wenigstens zwei bekannten Positionen aus aufgenommenen und mit den jeweiligen Bildinformationen verknüpften Entfernungsmessungen können nun die tatsächlichen räumlichen Positionen der Referenzstrukturen bestimmt werden. Zur Ableitung dieser Information können allgemein bekannte Verfahren der Photogrammetrie und der Bildverarbeitung verwendet werden. Insbesondere können von Schritt zu Schritt bzw. von bekannter Position zur nächsten sukzessive die Freiheitsgrade beschränkt werden. D.h. mit jeder bekannten Position, von der aus gemessen wird, erfolgt eine weitere oder genauere Bestimmung der räumlichen Positionen der Referenzstrukturen. Dabei sind die Zahl der erforderlichen Positionen und Zahl der aufgenommenen Parameter, wie auch die beabsichtigte Genauigkeit der Positionsbestimmung, miteinander korreliert. Die Verknüpfung von Bild- und Entfernungsinformation bietet gegenüber der sequentiellen Vermessung einzelner Punkte eine Vielzahl von Vorteilen. Aufgrund der zeitgleichen oder zeitnahen Erfassung und bildlichen Anordnung der Messungen werden Zuordnungsprobleme vermieden. Darüber hinaus bietet bereits die Erfassung der räumlichen Anordnung bzw. Abfolge der Messungen eine Zusatzinformation, die zur nachfolgenden Bestimmung der Aktualposition herangezogen werden kann.

Darüber hinaus kann durch eine Aufnahme von Bildern mit einer Unterteilung in Bildpunkten auf den Winkel einer Referenzstruktur gegenüber einem Bezugspunkt geschlossen werden. Erfolgt beispielsweise stets eine Bildaufnahme mit horizontaler Ausrichtung der Kameraachse, so kann anhand der Lage eines Bildpunktes der Winkel gegenüber der Horizontalen abgeleitet werden. Gleichermassen können auch die Punkte in ihrer Lage zueinander beschrieben werden.

Da nicht alle Punkte eines erfassten Bildes benötigt werden, kann die Zahl der Referenzstrukturen auf einfach und deutlich erkennbare Bildbereiche beschränkt werden, so dass auch Teilbilder oder durch Bildverarbeitung veränderte Bilder, z.B. durch Erhöhung des Kontrasts, verwendet bzw. abgespeichert werden. Hinsichtlich der Auswahl eines weiterhin zu betrachtenden, besonders geeigneten Teilbereichs des Bildes können vorteilhaft CMOS-Sensoren verwendet werden, die ein Subwindowing oder die Definition eines speziellen Interessenbereichs (Region of Interest) bei der Bildaufnahme ermöglichen.

Zur Identifikation von Strukturen in verschiedenen Bildern und einer ggf. erfolgenden automatisierten Vermessung existieren bekannte Verfahren der Bildverarbeitung und Vermessung. So wird beispielsweise in der zum Anmeldezeitpunkt noch nicht veröffentlichten europäischen Patentanmeldung Nr. 03011908 ein Verfahren und eine Vorrichtung zur geodätischen Vermessung eines Objektes mit Hilfe von Bildverarbeitung beschrieben. Dabei können zur Zielpunktfestlegung und Automatisierung eines Vermessungsvorganges auf dem Darstellungsbild plazierbare Vorlagen, sogenannte Templates, verwendet werden. Auch wird die Ableitung von präzisen Winkelinformationen aus einem Darstellungsbild ermöglicht.

Nach der Aufnahme der Bild- und Entfernungsinformationen von den beiden bekannten Positionen aus kann die Aktualposition auch im Totbereich bestimmt werden. Hierzu wird wiederum eine Aufnahme und Messung durchgeführt, bei der ein Sichtbereich erfasst werden muss, der zumindest zwei der Referenzstrukturen enthält. Aus der Kenntnis der Referenzstrukturen kann auf die Aktualposition zurückgeschlossen werden, z.B. durch ein Rückwärtsschnittverfahren. Hierfür müssen die tatsächlichen Positionen der Referenzstrukturen abgeleitet worden sein.

Alternativ kann jedoch auch auf eine Bestimmung dieser Positionen verzichtet werden, indem die Aktualposition vermittels einer Transformation aus den beiden bekannten Positionen abgeleitet wird. Die Aktualposition wird somit nicht über den Zwischenschritt der berechneten Positionen von Referenzstrukturen sondern direkt mit den beiden bekannten Positionen, von denen aus die Messungen durchgeführt wurden, verknüpft. Die Messung der Referenzstrukturen dient lediglich zur Ableitung der geeigneten Transformationsmatrizen.

Durch die hohe Zahl der aufgenommen Messungen können Mehrdeutigkeiten der Lösungen beseitigt und eine hinreichende Genauigkeit der Aktualposition gewährleistet werden.

Eine Möglichkeit der vollständig automatisierten Durchführung des Verfahrens mit einer Ausführungsform der erfindungsgemässen Vorrichtung erlaubt die Vermessung in Bereichen, die den Signalen des Positionierungssystems zugänglich oder aber abgeschattet sind, ohne besondere Berücksichtigung der Grenze dieser Bereiche während des Messvorgangs. Hierzu wird die Vorrichtung so ausgebildet, dass diese während des Vermessungsvorganges mit ihrem Erfassungsbereich stets grob auf einen gut sichtbaren Bereich ausgerichtet wird. Dabei werden automatisch und fortlaufend Bilder dieses Bereichs zusammen mit den gemessenen Entfernungen aufgenommen. Die Identifikation der Referenzpunkte im Erfassungsbereich bzw. in den Bildern erfolgt über Verfahren der Bildverarbeitung und automatisch. Durch die während der Vermessung ständig durchgeführten, fortlaufenden Aufnahmen werden verschiedene Punkte durchlaufen, deren Position durch das Positionierungssystem bestimmt werden oder deren Position ohnehin bekannt ist, z.B. da es sich um vorher eingemessene oder trigonometrische Punkte handelt. Solange die Signale des Positionierungssystems in einem zur Bestimmung der Aktualposition hinreichenden Ausmass erfasst werden, wird zur Positionsbestimmung das Positionierungssystem verwendet. Verschlechtert sich aber der Empfang oder wird dieser vollständig unterbrochen, so schaltet die Vorrichtung automatisch auf das erfindungsgemässe Verfahren zur Referenzierung anhand von Referenzpunkten um. Hierbei kann auch parallel eine Warnung oder ein Hinweis an den Benutzer ausgegeben werden. Hierdurch wird es möglich, ohne Berücksichtigung der Einschränkungen durch ggf. abgeschattete Signale Vermessungen durchzuführen. Insbesondere in stark durchschnittenen Regionen müssen nur noch zwei bekannte Ausgangspunkte gewählt werden, von denen aus dann das Verfahren auch Messungen in Totbereichen, z.B. in Strassenschluchten, ermöglicht.

Grundsätzlich besteht darüber hinaus auch die Möglichkeit, das erfindungsgemässe Verfahren auch in Bereichen zu verwenden, in denen ein Empfang von Signalen eines Positionierungssystems möglich ist. Insofern ist die Verwendung des Verfahrens nicht auf den Einsatz in Totbereichen beschränkt.

Unter dem Begriff "geodätisches Instrument" soll in diesem Zusammenhang verallgemeinernd stets ein Messinstrument oder ein Instrument, das in Zusammenhang mit geodätischen Messungen verwendet wird, wie z.B. ein Lotstock, verstanden werden, wobei dieses zur Messung oder Überprüfung von Daten mit räumlichem Bezug dient. Insbesondere betrifft dies die Messung von Entfernung und/oder Richtung bzw. Winkeln zu einem Bezugs- oder Messpunkt. Darüber hinaus können jedoch noch weitere Vorrichtungen, z.B. Komponenten zur Bildaufnahme oder zur Kommunikation mit anderen Systemkomponenten, vorhanden sein, die für ergänzende Messungen oder Datenaufnahmen verwendet werden können.

Insbesondere sollen hier unter einem solchen geodätischen Instrument Theodoliten und auch sogenannte Totalstationen als Tachymeter mit elektronischer Winkelmessung und elektrooptischem Entfernungsmesser verstanden werden. Gleichermassen ist die Erfindung zur Verwendung in spezialisierten Vorrichtungen mit ähnlicher Funktionalität geeignet, z.B. in militärischen Richtkreisen oder in der industriellen Bauwerks- oder Prozessüberwachung; diese Systeme werden hiermit ebenfalls unter dem Begriff "geodätisches Instrument" erfasst.

Das erfindungsgemässe Verfahren bzw. eine erfindungsgemässe Vorrichtungen werden nachfolgend anhand von in der Zeichnung schematisch dargestellten Ausführungsbeispielen rein beispielhaft näher beschrieben. Im einzelnen zeigen
- Fig.1: die schematische Darstellung einer Vermessungsaufgabe unter Verwendung eines Positionierungssystems mit abschattbaren Signalen;
- Fig.2: ein Beispiel für das Entstehen von abgeschatteten Bereichen bei Verwendung eines satellitengestützten Positionierungssystems;
- Fig.3: ein Beispiel für das Entstehen von abgeschatteten Bereichen bei Verwendung eines erdgestützten Positionierungssystems;
- Fig.4: die schematische Darstellung des ersten Verfahrensschrittes des erfindungsgemässen Verfahrens unter Verwendung eines satellitengestützten Positionierungssystems;
- Fig.5: die schematische Darstellung des zweiten Verfahrensschrittes des erfindungsgemässen Verfahrens unter Verwendung eines satellitengestützten Positionierungssystems;
- Fig.6: die schematische Darstellung der Bestimmung einer Aktualposition in einem abgeschatteten Bereich mit dem erfindungsgemässen Verfahren in einer ersten Ausführungsform;
- Fig.7: die schematische Darstellung der Bestimmung einer Aktualposition in einem abgeschatteten Bereich mit dem erfindungsgemässen Verfahren in einer zweiten Ausführungsform;
- Fig.8: die schematische Darstellung der Aufnahme von Referenzstrukturen und der diesen zugeordneten Entfernungen;
- Fig.9: die schematische Darstellung der Ableitung von Bildinformationen aus der Aufnahme von Referenzstrukturen;
- Fig.10: ein Beispiel zur Erläuterung der Nutzung von Bildinformationen zur Behebung von Mehrdeutigkeiten bei der Positionsbestimmung und
- Fig.11: die schematische Darstellung einer Ausführungsform der erfindungsgemässen Vorrichtung bzw. eines erfindungsgemässen geodätischen Instruments.

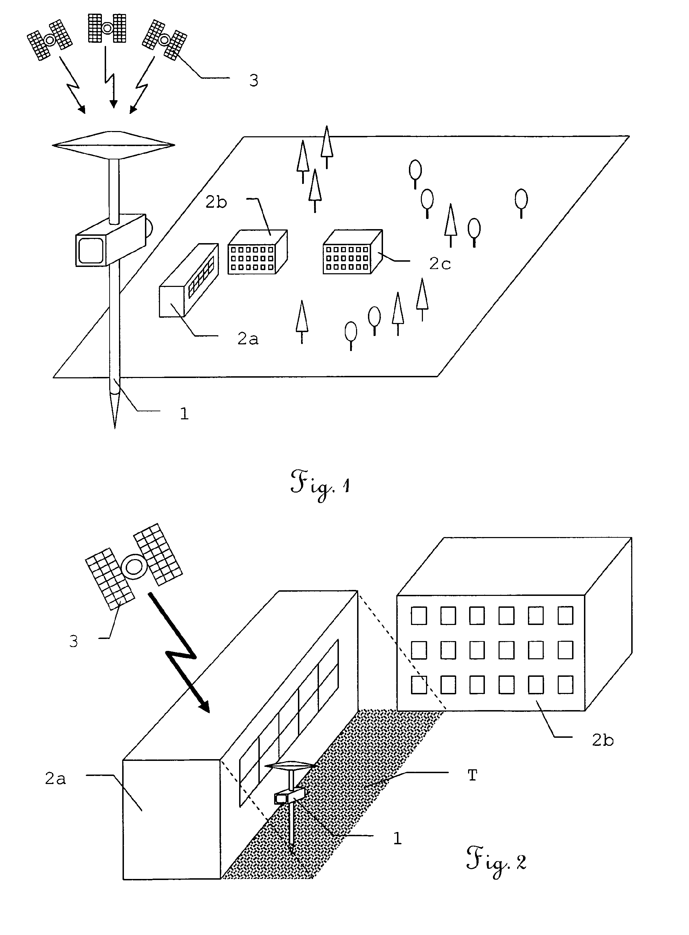

In Fig.1 wird eine typische Vermessungsaufgabe unter Verwendung eines Positionierungssystems dargestellt. Ziel der Vermessung ist die Positionsbestimmung verschiedener Punkte an einem Objekt 2c, das in einer Gebäudegruppe zusammen mit einer Halle 2a und einem Gebäude 2b angeordnet ist. Zur Vermessung wird ein geodätisches Instrument 1 verwendet, das über die für die jeweilige Vermessungsaufgabe notwendigen Komponenten verfügt. Die Aktualposition dieses Instruments 1, welche die jeweils für den Vermessungszweck zu bestimmende gegenwärtige Position darstellt, kann anhand der Signale eines Positionierungssystems bestimmt werden, wobei dieses hier rein exemplarisch als ein satellitengestütztes System angenommen wird. Aus den von einem Satellitenempfänger des Instruments 1 empfangenen, sich im wesentlichen gradlinig ausbreitenden Signalen der Satelliten 3 kann die Aktualposition abgeleitet werden.

Fig.2 zeigt schematisch die Situation in unmittelbarer der Nähe des zu vermessenden Objekts. Muss das Instrument 1 zu Vermessungszwecken in unmittelbarer Nähe der Halle 2a positioniert werden, erfolgt durch die Höhe der Halle 2a eine Unterbrechung der Sichtstrecke zu den für die Bestimmung der Aktualposition benötigten Satelliten 3. Damit wird durch die Halle 2a ein Totbereich T definiert, in dem der Empfang von Signalen der Satelliten 3 eingeschränkt oder verhindert ist. Die Vermessung des Objektes kann aus diesem Totbereich T nicht mehr erfolgen, da die Aktualposition nicht mehr mit Hilfe des Positionierungssystems bestimmt werden kann. Allerdings ist aus diesem Totbereich T heraus das Gebäude 2b gut einsehbar.

Eine ähnliche Situation wird in Fig.3 für eine andere Variante eines Positionierungssystems dargestellt. Bei zur Fig.2 gleicher Vermessungsaufgabe wird nun ein Instrument 1' verwendet, dessen Position mit Hilfe einer Totalstation 4 als Total Positioning System bestimmt wird. Zu diesem Zweck trägt das Instrument statt eines Satellitenempfängers einen Reflektor, so dass von der auf einem bekannten Punkt positionierten Totalstation 4 aus Richtung und Entfernung zum Reflektor gemessen wird. Aus diesen Daten kann die Aktualposition des Instruments 1' bestimmt werden. In einer zur Darstellung der Fig.2 ähnlichen Weise wird auch die zur Messung notwendige Sichtverbindung zwischen Totalstation 4 und Instrument 1' durch die Halle 2a in bestimmten Bereichen eingeschränkt oder unterbrochen, so dass ebenfalls ein Totbereich T' entsteht.

Fig.4 zeigt schematisch den ersten Schritt eines beispielhaften erfindungsgemässen Verfahrens zur Bestimmung der Aktualposition. Von einer ersten bekannten Position P1 aus werden mit dem Instrument 1 mindestens zwei Referenzstrukturen 5 an dem auch aus dem Totbereich T erfassbaren Gebäude 2b erfasst und die Entfernung zu diesen Referenzstrukturen 5 gemessen. In diesem Beispiel werden als Referenzstrukturen 5 rein exemplarisch Punkte gewählt, wobei jedoch insbesondere durch Bildverarbeitungsverfahren auch ausgedehnte Strukturen ausgewählt und in den weiteren Schritten miteinander verglichen werden können. Auch können im Totbereich T selbst gelegene Referenzstrukturen ausgewählt werden, d.h. eine Messung könnte auch erfindungsgemäss zu einer Referenzstruktur bzw. einem Punkt an der Halle 2a erfolgen. Die Entfernungsmessung erfolgt unter Verwendung der Aufnahme eines Bildes, in dem die Entfernungen den Referenzstrukturen 5 zugeordnet werden. In diesem Beispiel kann die erste bekannte Position P1 durch die Signale von Satelliten 3 bestimmt werden, da sich diese erste bekannte Position P1 ausserhalb des durch die Halle 2a erzeugten Totbereichs T befindet. Nach der Aufnahme der Referenzstrukturen 5 mit den zugeordneten Bildinformationen und Entfernungen wird das Instrument 1 auf eine zweite bekannte Position P2 verlegt.

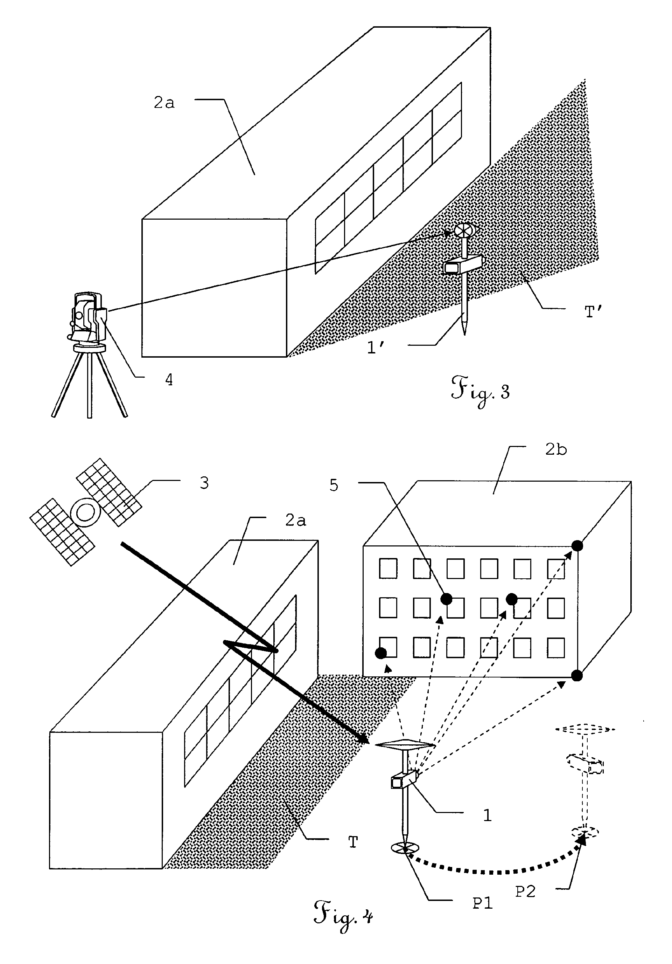

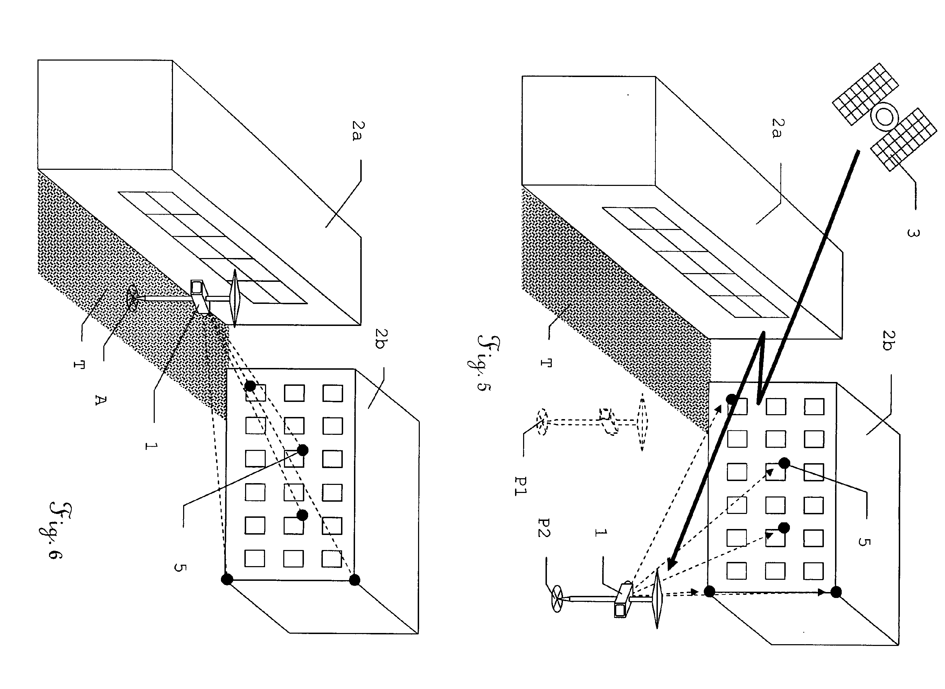

Wie in Fig.5 dargestellt, erfolgt von dieser zweiten bekannten Position P2 aus eine zweite Aufnahme der am Gebäude 2b befindlichen Referenzstrukturen 5 zusammen mit den zugeordneten Bildinformationen und Entfernungen. In diesem Beispiel ist auch die zweite bekannte Position P2 durch die Signale der Satelliten 3 eines Positionierungssystems bestimmbar. Alternativ können aber auch die erste bekannte Position P1 und/oder die zweite bekannte Position P2 durch andere Verfahren bestimmt werden oder auch in ihrer Position bekannt sein. Grundsätzlich kann damit auch eine oder beide der Positionen im Totbereich T liegen, allerdings muss die Position dann auch ohne Positionierungssystem bestimmbar bzw. bekannt sein. Wie bei allen dargestellten Bewegungen kann die Erfassung der Referenzstrukturen 5 durch eine automatische Zielverfolgung ermöglicht oder erleichtert werden.

Fig.6 zeigt schematisch die Bestimmung einer Aktualposition A mit Hilfe einer ersten Ausführungsform des erfindungsgemässen Verfahrens. Das Instrument 1 befindet sich nun im durch die Halle 2a erzeugten Totbereich T. Aus diesem Totbereich T heraus kann das Gebäude 2b und wenigstens ein Teil der Referenzstrukturen 5 erfasst werden, so dass über diese Referenzstrukturen 5 die Aktualposition A bestimmt werden kann. Diese Bestimmung beruht dabei in der ersten Ausführungsform des erfindungsgemässen Verfahrens auf der Kenntnis der tatsächlichen Position der Referenzstrukturen 5, wobei diese aus den Bildinformationen und Entfernungen berechnet werden, die während der in Fig.4 und Fig.5 dargestellten Schritte aufgenommen wurden. Zur Ableitung der Aktualposition A wird in zu den ersten beiden Schritten ähnlicher Weise die Bildinformation und Entfernung der Referenzstrukturen 5 aufgenommen, so dass aus der Kenntnis dieser Daten und der bekannten Position der Referenzstrukturen 5, z.B. mittels Rückwärtsschnitt, die Aktualposition bestimmt werden kann. Neben der Betrachtung im Bild enthaltener isolierter Referenzstrukturen 5 kann dabei eine Auswertung der verschiedenen Bildinformationen auch durch einen umfangreichen Abgleich im Rahmen einer Bildverarbeitung, z.B. durch geeignete Matching-Verfahren, erfolgen, wobei parallel eine grössere Anzahl von Punkten berücksichtigt wird.

In Fig.7 wird schematisch die Bestimmung einer Aktualposition A mit Hilfe einer zweiten Ausführungsform des erfindungsgemässen Verfahrens erläutert. Das Instrument 1 befindet sich im durch die Halle 2a erzeugten Totbereich T aus dem heraus das Gebäude 2b und wenigstens ein Teil der Referenzstrukturen 5 erfasst werden kann. Die Bestimmung der Aktualposition A erfolgt dabei in dieser zweiten Ausführungsform des erfindungsgemässen Verfahrens vermittels einer Transformation der in Fig.4 und Fig.5 dargestellten ersten bekannten Position P1 und zweiten bekannten Position P2 auf die Aktualposition A. Die Verknüpfung dieser Positionen erfolgt über die Referenzstrukturen 5, für die jeweils Transformationsmatrizen abgeleitet werden. Solche Transformationsverfahren sind beispielsweise aus der Photogrammetrie bekannt bzw. ableitbar. Damit werden bei dieser zweiten Ausführungsform des erfindungsgemässen Verfahrens keine wirklichen Positionen für die Referenzstrukturen 5 berechnet, so dass bei der Berechnung auftretende Fehler vermieden werden können.

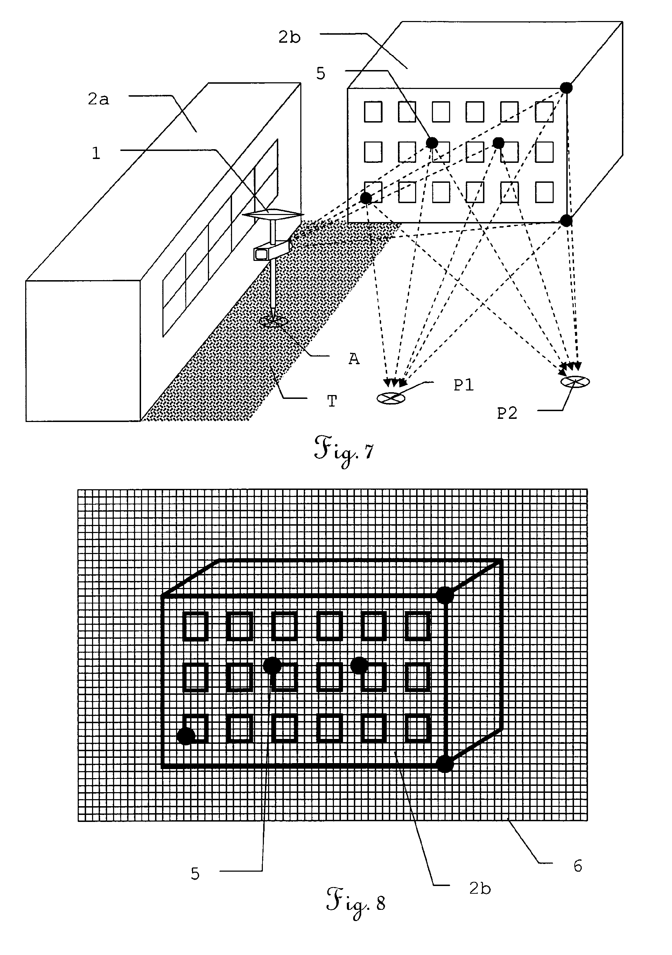

Fig.8 zeigt rein exemplarisch die Aufnahme von Referenzstrukturen und damit verknüpfter Entfernungen. Durch eine Komponente zur Bildaufnahme, beispielsweise eine CD- oder CMOS-Kamera, vorzugsweise mit Range-Imaging-Funktionalität, wird das Gebäude 2b in einem Bild 6 erfasst und dieses gegebenenfalls abgespeichert. Das Bild 6 besteht aus einer grösseren Anzahl von Bildpunkten, wobei die Referenzstrukturen 5 in ihrer Ausdehnung jeweils nur einem oder aber mehreren Bildpunkten zugeordnet werden können. Zu diesen Referenzstrukturen werden Entfernungsmessungen durchgeführt, wobei sowohl Referenzstrukturen 5 als auch die Messpunkte der Entfernungsmessung manuell oder automatisiert bestimmt werden können. Für eine automatisierte Auswahl und Identifikation geeigneter Strukturen stehen bekannte Verfahren der Bildverarbeitung zur Verfügung, wie z.B. Template-Matching und/oder neuronale Netze. Bei grösseren Strukturen können Entfernungsmessungen sowohl zu jedem einzelnen Bildpunkt, als auch zu einem einzigen, der Referenzstruktur 5 zugeordneten Bildpunkt erfolgen, aus dem dann die Entfernungsinformationen für weitere Bildpunkte extrapoliert werden können. Im gezeigten Beispiel können zu allen erfassten fünf Punkten als Referenzstrukturen 5 Entfernungsmessungen durchgeführt werden, wobei die Entfernung dem jeweiligen mittleren (Schwerpunkts-)-Bildpunkt oder aber auch allen vom jeweiligen Punkt abgedeckten Bildpunkten gleichermassen zugeordnet werden kann.

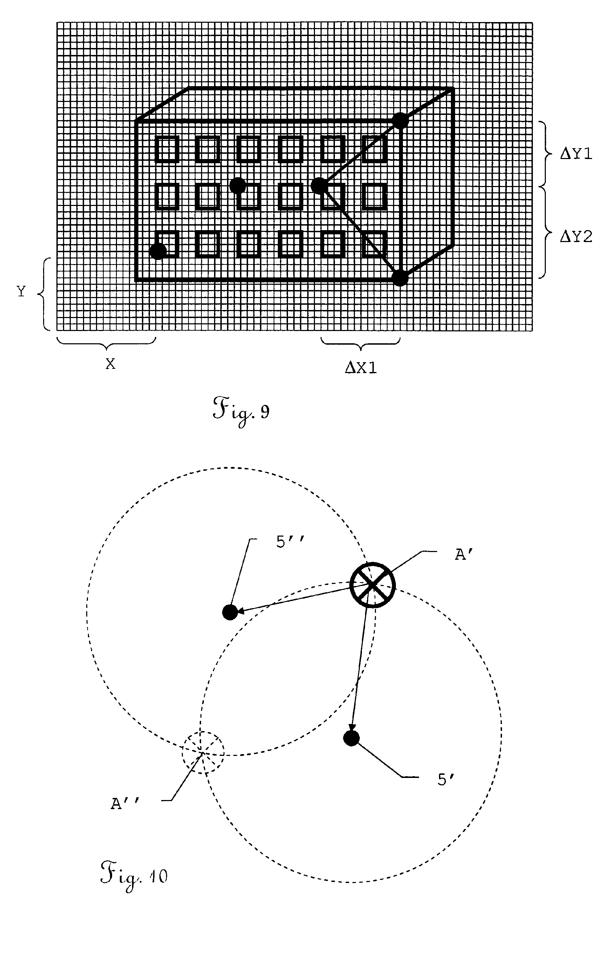

In Fig.9 wird rein beispielhaft die Ableitung von Bildinformationen aus der Aufnahme von Referenzstrukturen dargestellt. Das hier gezeigte Beispiel dient lediglich der prinzipiellen Erläuterung, da bei realisierten Ausführungsformen vorwiegend höher entwickelte Verfahren der Bildverarbeitung vorteilhaft eingesetzt werden können, was jedoch eine rein manuelle Handhabung nicht ausschliesst. Neben der punkt- bzw. strukturspezifischen Entfernungsinformation können aus der Aufnahme weitere Bildinformationen abgeleitet werden, die beispielsweise die Lage im Bild oder die relative Anordnung der Referenzstrukturen 5 untereinander betreffen. Beispielsweise kann die Lage des äusserst links gelegenen Punktes durch ein horizontales und vertikales Abzählen der Bildpunkte bestimmt werden. Aus der horizontalen Zahl X und der vertikalen Zahl Y von Bildpunkten kann die Lage im Bild wie auch gegenüber einem Bezugspunkt bestimmt werden, der hier die linke untere Ecke des erfassten Bildausschnittes sein kann. Gleichermassen können auch die Lagen der Punkte zueinander vermessen werden, wie dies anhand der Differenzen ΔX1, ΔY1 und ΔY2 von Bildpunkten zwischen einzelnen Punkten verdeutlicht wird. Aus den Differenzen können aufgrund der vorhandenen Entfernungsmessungen zu den Punkten auch Winkel abgeleitet werden. Damit wird neben der Entfernungsmessung auch parallel eine Information über die Anordnung der Referenzstrukturen zueinander und gegenüber einem Bezugspunkt erfasst, die als Bildinformationen mit den Bildinformationen weiterer Aufnahmen verglichen werden können. Es ist für ein erfindungsgemässes Verfahren nicht erforderlich, vollständige Bilder aufzunehmen oder abzuspeichern. Relevant ist eine Aufnahme von Bildinformationen oder Bildmerkmalen, die einen Vergleich mit weiteren Aufnahmen ermöglicht. Hierzu können beispielsweise spezielle Regionen des Erfassungsbereichs (Regions of Interest) ausgewählt werden oder aber die Darstellung des erfassten Bereichs bearbeitet werden, so dass Strukturen deutlicher hervortreten und leichter zu erkennen sind. Insofern ist eine Bildinformation nicht in jedem Fall deckungsgleich mit der Aufnahme eines Vollbildes sondern kann jeweils ein mehr oder weniger an Informationen beinhalten.

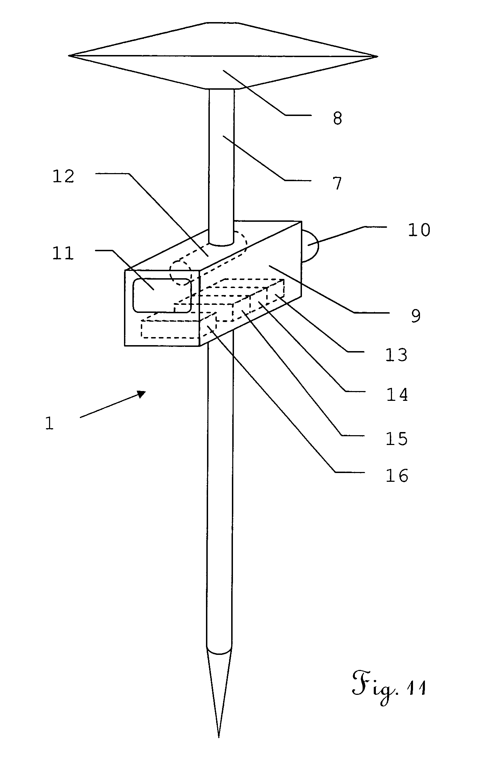

Fig.10 zeigt ein stark vereinfachtes, zweidimensionales Beispiel zur Erläuterung der Nutzung von Bildinformationen zur Behebung von Mehrdeutigkeiten bei der Positionsbestimmung. Für eine Ableitung der Aktualposition stehen zwei hinsichtlich ihrer Position bekannte Referenzstrukturen 5 und 5' zur Verfügung. Zu beiden Referenzstrukturen 5 und 5' wird die Entfernung gemessen, so dass die Aktualposition auf einem Kreis mit der jeweiligen Entfernung um die Position der jeweiligen Referenzstruktur 5 bzw. 5' liegen muss. Eine gleichzeitige Erfüllung dieser Bedingung liegt nur an den beiden Schnittpunkten der Kreise vor. Ohne weitere Information kann nun nicht entschieden werden, welche der beiden daraus resultierenden und möglichen Aktualpositionen A' oder A" korrekt ist. Aus der Aufnahme eines Bildes ist als Bildinformation abzuleiten, dass bei allen Messungen die zweite Referenzstruktur 5" stets rechts von der ersten Referenzstruktur 5' gelegen war, so dass die mögliche Aktualposition A'' auszuschliessen ist. Dieses stark vereinfachte und rein qualitative Beispiel soll erläutern, wie auf grundsätzliche Weise Bildinformation zur Reduzierung von Mehrdeutigkeiten verwendet werden kann. Eine reine ungeordnete Erfassung von Entfernungsmessungen zu verschiednen Punkten beinhaltet nicht die notwendige Anordnungsinformation. Darüber hinaus können aus den Aufnahmen noch quantitative Bildinformationen, wie z.B. die Winkel der Referenzstrukturen zueinander, abgeleitet werden.

Die schematische Darstellung einer möglichen Ausführungsform der erfindungsgemässen Vorrichtung bzw. eines erfindungsgemässen geodätischen Instruments 1 erfolgt in Fig.11. Das geodätische Instrument 1 weist einen Lotstock 7 auf, der über eine Spitze genau positionierbar ist. An dem Lotstock 7 befindet sich ein GPS-Empfänger 8 für ein satellitengestütztes Positionierungssystem als Einheit zur Positionsbestimmung sowie eine Messeinheit 9 mit einer Vorrichtung zur Bestimmung einer Aktualposition des geodätischen Instrumentes 1. Diese Vorrichtung weist eine Bildaufnahmeeinheit 10, einen Bild- und/oder Bildinformationsspeicher 13, einen Entfernungsmesser 12 und eine Datenverarbeitungseinheit 14 auf. Der von der Bildaufnahmeeinheit 10 erfasste Bereich wird dem Benutzer auf einem berührungssensitiven Bildschirm 11 angezeigt, wobei der Benutzer den Vermessungsvorgang über diesen Bildschirm steuern kann. Sinkt die Intensität der Signale des Positionierungssystems unter eine vorbestimmte Schwelle, wird der Benutzer über eine Alarmierung auf den Signalverlust hingewiesen. Optional kann durch die Datenverarbeitungseinheit 14 der Übergang zur automatisierten Durchführung des erfindungsgemässen Verfahrens ausgelöst werden. Darüber hinaus kann die Vorrichtung optional einen Neigungsmesser 15 und/oder einen Richtungsmesser 16 aufweisen.

In den Figuren sind die Verfahrensschritte, Gebäude und verwendeten Instrumente rein schematisch dargestellt. Insbesondere können aus den Darstellungen keine Grössenverhältnisse oder Details der Bildverarbeitung bzw. Vermessung der Referenzstrukturen entnommen werden. Die nur exemplarisch als Referenzstrukturen dargestellten Punkte stehen stellvertretend auch für komplexere Strukturen, die mit Mitteln der Bildverarbeitung hinsichtlich der Vermessung und Auswertung beherrschbar werden.

## Patentansprüche

1. Verfahren zur Bestimmung einer Aktualposition (A) eines geodätischen Instrumentes (1,1'),
mit einem Positionierungssystem, das auf dem Empfang von abschattbaren Signalen beruht,
und einem Totbereich (T,T'), innerhalb dessen die Ausbreitung der Signale derart beeinträchtigt ist, dass eine direkte Bestimmung der Aktualposition (A) mittels des Positionierungssystems zumindest eingeschränkt ist,
mit den Schritten
- Aufnehmen einer ersten Bildinformation von einer ersten bekannten, insbesondere mittels des Positionierungssystem bestimmten, Position (P1) aus, wobei die erste Bildinformation wenigstens zwei identifizierbare Referenzstrukturen (5,5',5" ) aufweist, die zumindest von einem Teilbereich des Totbereichs (T,T') aus erfaßt werden können, und Messen wenigstens einer ersten Entfernung von der ersten bekannten Position (P1) aus, wobei die erste Entfernung den Referenzstrukturen (5,5',5" ) mittelbar oder unmittelbar zugeordnet wird,
- Aufnehmen einer zweiten Bildinformation von einer zweiten bekannten, insbesondere mittels des Positionierungssystem bestimmten, Position (P2) aus, wobei die zweite Bildinformation wenigstens die zwei identifizierbaren Referenzstrukturen (5,5',5'') aufweist, und Messen wenigstens einer zweiten Entfernung von der zweiten bekannten Position (P2) aus, wobei die zweite Entfernung den Referenzstrukturen (5,5',5") mittelbar oder unmittelbar zugeordnet wird,
- Aufnehmen einer aktuellen Bildinformation von einer Aktualposition (A) aus, wobei die aktuelle Bildinformation wenigstens die zwei identifizierbaren Referenzstrukturen (5,5',5") aufweist, und Messen wenigstens einer aktuellen Entfernung von der Aktualposition (A) aus, wobei die aktuelle Entfernung den Referenzstrukturen (5,5',5" ) mittelbar oder unmittelbar zugeordnet wird,
- Ableiten der Aktualposition (A) durch eine Referenzierung bezüglich der wenigstens zwei Referenzstrukturen (5,5',5''),
wobei einzelne oder mehrere der Schritte wiederholt werden können.

2. Verfahren nach Anspruch 1,
**dadurch gekennzeichnet, dass**
beim Messen der Entfernungen zu jedem der Referenzpunkte (5,5',5" ) jeweils eine Entfernung gemessen wird.

3. Verfahren nach Anspruch 1 oder 2,
**dadurch gekennzeichnet, dass**
beim Aufnehmen der Bildinformation eine Messung der Entfernung zu jedem Punkt eines erfassten Bildes erfolgt.

4. Verfahren nach Anspruch 1, 2 oder 3,
**dadurch gekennzeichnet, dass**
beim Ableiten der Aktualposition (A) die Position der zwei Referenzstrukturen (5,5',5" ) bestimmt wird.

5. Verfahren nach Anspruch 4,
**dadurch gekennzeichnet, dass**
das Ableiten der Aktualposition (A) vermittels eines Rückwärtsschnitts erfolgt.

6. Verfahren nach Anspruch 1, 2 oder 3,
**dadurch gekennzeichnet, dass**
beim Ableiten der Aktualposition (A) eine Transformation verwendet wird, welche die Aktualposition (A) über die wenigstens zwei Referenzstrukturen (5) mit der ersten bekannten Position (P1) und der zweiten bekannten Position (P2) verknüpft.

7. Verfahren nach einem der vorangehenden Ansprüche,
**dadurch gekennzeichnet, dass**
das Messen der Entfernungen mittels optischer Entfernungsmessung, insbesondere Laserentfernungsmessung, durchgeführt wird.

8. Verfahren nach einem der vorangehenden Ansprüche,
**dadurch gekennzeichnet, dass**
es sich bei dem Positionierungssystem um das Global Positioning System oder ein anderes satellitengestütztes System handelt.

9. Verfahren nach einem der Ansprüche 1 bis 8,
**dadurch gekennzeichnet, dass**
es sich beim Positionierungssystem um ein erdgestütztes System, insbesondere ein Total Positioning System, handelt.

10. Verfahren nach einem der vorangehenden Ansprüche,
**dadurch gekennzeichnet, dass**
die wenigstens zwei Referenzstrukturen (5,5',5'') automatisch verfolgt und/oder identifiziert werden.

11. Verfahren nach einem der vorangehenden Ansprüche,
**dadurch gekennzeichnet, dass**
die wenigstens die erste Bildinformation gespeichert wird und die wenigstens zwei Referenzstrukturen (5,5',5'') in der zweiten Bildinformation und/oder der aktuellen Bildinformation durch Verfahren der Bildverarbeitung, insbesondere durch Matching-Verfahren, identifiziert werden.

12. Verfahren nach einem der vorangehenden Ansprüche,
**dadurch gekennzeichnet, dass**
das Aufnehmen der ersten und zweiten Bildinformation und das Messen der ersten und zweiten Entfernungen automatisiert durchgeführt werden, insbesondere ständig wiederholt werden.

13. Verfahren nach Anspruch 12,
**dadurch gekennzeichnet, dass**
bei einer Einschränkung der direkten Bestimmung der Aktualposition (A) mittels des Positionierungssystems das Ableiten der Aktualposition (A) automatisiert, insbesondere wiederholt oder fortlaufend, erfolgt.

14. Vorrichtung zur Bestimmung einer Aktualposition (A) eines geodätischen Instrumentes (1) durch ein Verfahren nach einem der Ansprüche 1 bis 13 mit den Komponenten
• Bildaufnahmeeinheit (10), insbesondere mit einem Bildspeicher und/oder einem Bildinformationsspeicher (13),
• Entfernungsmesser (12), insbesondere Laserentfernungsmesser,
• Datenverarbeitungseinheit (14) zum Ableiten der Aktualposition,
**dadurch gekennzeichnet, dass**
die Komponenten so ausgebildet und angeordnet sind, dass ein Verfahren nach einem der Ansprüche 1 bis 13 automatisiert durchführbar ist.

15. Vorrichtung nach Anspruch 14,
**dadurch gekennzeichnet, dass**
der Entfernungsmesser in die Bildaufnahmeeinheit (10) integriert ist, insbesondere in Form eines Range Imaging Sensors oder eines scannenden Entfernungsmessers.

16. Vorrichtung nach Anspruch 14 oder 15,
**dadurch gekennzeichnet, dass**
die Datenverarbeitungseinheit (14) so ausgebildet ist, dass eine Einschränkung der direkten Bestimmung der Aktualposition (A) mittels des Positionierungssystems erkennbar und eine Alarmierung und/oder ein automatisiertes Ableiten der Aktualposition (A) auslösbar ist.

17. Vorrichtung nach Anspruch 14, 15 oder 16, **gekennzeichnet durch**
einen Neigungsmesser (15).

18. Vorrichtung nach einem der Ansprüche 14 bis 17, **gekennzeichnet durch**
einen Richtungsmesser (16), insbesondere einen Magnetkompass.

19. Geodätisches Instrument (1) mit einer Einheit zur Positionsbestimmung vermittels eines auf dem
Empfang abschattbarer Signale beruhenden Positionierungssystems, insbesondere mit einer Einheit zur Positionsbestimmung, die einen Reflektor zur geodätischen Vermessung oder einen GPS-Empfänger (8) aufweist, und einer Vorrichtung nach einem der Ansprüche 14 bis 18.

20. Computerprogramm als Aufzeichnung auf einem Datenträger oder in Form eines Datensignals zur Durchführung des Verfahrens nach einem der Ansprüche 1 bis 13.
